(19)

Europäisches Patentamt
European Patent Office
Office européen des brevets

(11)  **EP 4 787 524 A1**

(12)  **EUROPEAN PATENT APPLICATION**
published in accordance with Art. 153(4) EPC

(43)  Date of publication:
05.08.2026  Bulletin 2026/32

(21)  Application number: 24872631.7

(22)  Date of filing: 17.04.2024

(51)  International Patent Classification (IPC):
*H01M 10/0562* $^{(2010.01)}$  *H01M 10/052* $^{(2010.01)}$
*H01M 4/133* $^{(2010.01)}$  *H01M 4/134* $^{(2010.01)}$
*C01B 17/22* $^{(2006.01)}$

(52)  Cooperative Patent Classification (CPC):
**H01M 50/457; H01M 10/0562; H01M 50/403;
H01M 50/411;** H01M 10/0525; H01M 2300/0068;
Y02E 60/10

(86)  International application number:
**PCT/KR2024/005146**

(87)  International publication number:
**WO 2025/070916 (03.04.2025 Gazette 2025/14)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30)  Priority:  25.09.2023  KR 20230128381

(71)  Applicant: SAMSUNG SDI CO., LTD.
**Yongin-si, Gyeonggi-do 17084 (KR)**

(72)  Inventors:
•  **JUNG, Mijung**
**Yongin-si, Gyeonggi-do 17084 (KR)**
•  **AN, Seonhyeok**
**Yongin-si, Gyeonggi-do 17084 (KR)**
•  **OH, Seunghyun**
**Yongin-si, Gyeonggi-do 17084 (KR)**

(74)  Representative: **Michalski Hüttermann & Partner
mbB
Kaistraße 16A
40221 Düsseldorf (DE)**

(54)  **SOLID ELECTROLYTE MEMBRANE, PREPARATION METHOD THEREOF, AND ALL-SOLID RECHARGEABLE BATTERIES**

(57)  Disclosed are a solid electrolyte membrane, a method of manufacturing the same, and an all-solid-state rechargeable battery, the solid electrolyte membrane including a first layer including solid electrolyte particles; a second layer disposed on the first layer and including a composite; and a third layer disposed on the second layer and including solid electrolyte particles, and the composite includes a core including diamagnetic particles; and a shell surrounding the core and including a solid electrolyte.

FIG. 2

EP 4 787 524 A1

**Description**

[Technical Field]

Solid electrolyte membranes, methods of manufacturing the same, and all-solid-state rechargeable batteries are disclosed.

[Background Art]

Recently, development of batteries with high energy density and safety has been actively being made in response to industrial demands. For example, lithium ion batteries have been being commercially available in the automobile fields as well as the information-related device and communication device fields.

However, because lithium ion batteries currently on the market use an electrolyte solution, which includes a flammable organic dispersive medium, if a short circuit occurs inside the batteries, there may be problems of overheating and fire. Accordingly, an all-solid rechargeable battery using a solid electrolyte instead of an electrolyte solution is being proposed.

[Disclosure]

According to some embodiments, a solid electrolyte membrane capable of improving the ionic conductivity and high rate capability of an all-solid-state rechargeable battery while ensuring battery safety, a method of manufacturing the same, and an all-solid-state rechargeable battery including the same are provided.

In some embodiments, a solid electrolyte membrane includes a first layer including solid electrolyte particles; a second layer disposed on the first layer and including a composite; and a third layer disposed on the second layer and including solid electrolyte particles,

wherein the composite includes a core including diamagnetic particles; and a shell surrounding the core and including a solid electrolyte.

In some embodiments, a manufacturing method of the solid electrolyte membrane includes forming a first layer comprising solid electrolyte particles,

forming a second layer including the composite on the first layer, and
forming a third layer including solid electrolyte particles on the second layer,
wherein the composite includes a core including diamagnetic particles; and a shell surrounding the core and containing the solid electrolyte.

Some embodiments provide an all-solid-state rechargeable battery including a positive electrode layer; a negative electrode layer; and the solid electrolyte membrane between the positive electrode layer and the negative electrode layer.

A solid electrolyte membrane and an all-solid rechargeable battery including the same according to some embodiments may improve ionic conductivity and high rate characteristics while ensuring battery safety.

[Description of the Drawings]

FIG. 1 is a schematic cross-sectional view of Composite 1 according to some embodiments.
FIG. 2 is a schematic diagram of a solid electrolyte membrane 300 according to some embodiments.
FIG. 3 is a schematic diagram of the movement path of lithium ions in the solid electrolyte membrane 300 that does not include the composite 1.
FIG. 4 is a schematic diagram of the movement path of lithium ions in the second layer 12 according to some embodiments.
FIG. 5 is a schematic perspective view of the solid electrolyte membrane 300 according to some embodiments.
FIG. 6 is a schematic cross-sectional view of the second layer 12 in the solid electrolyte membrane 300 according to some embodiments.
FIGS. 7 and 8 are schematic cross-sectional views of the all-solid-state rechargeable battery 100 according to some embodiments.

[Mode for Invention]

Hereinafter, embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a stack, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" includes not only a shape formed on the whole surface when viewed from a plan view, but also a shape formed on a partial surface.

"Particle diameter" or "average particle diameter" may be measured by a method well known to those skilled in the art, for example may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. An average particle diameter may mean a diameter (D50) of particles having a cumulative volume of 50 volume% in a particle size distribution.

"Thickness" may be measured through photographs taken with an optical microscope, for example a scanning electron microscope.

## Solid Electrolyte Membrane

In some embodiments, a solid electrolyte membrane includes a first layer including solid electrolyte particles; a second layer disposed on the first layer and including a composite; and a third layer disposed on the second layer and including solid electrolyte particles, wherein the composite includes a core including diamagnetic particles; and a shell surrounding the core and including a solid electrolyte.

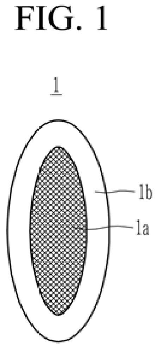

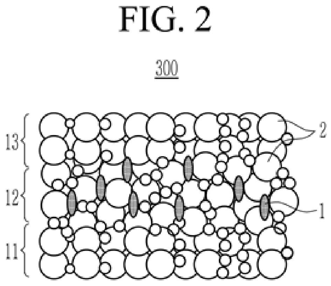

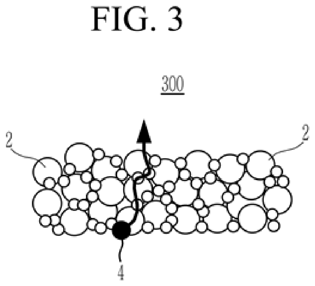

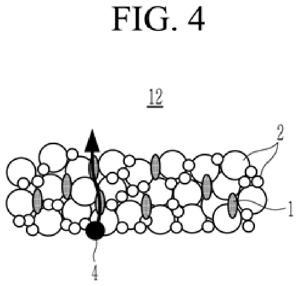

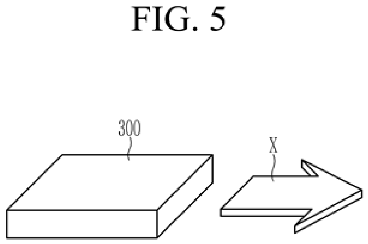

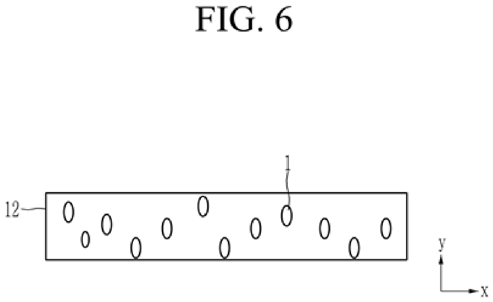

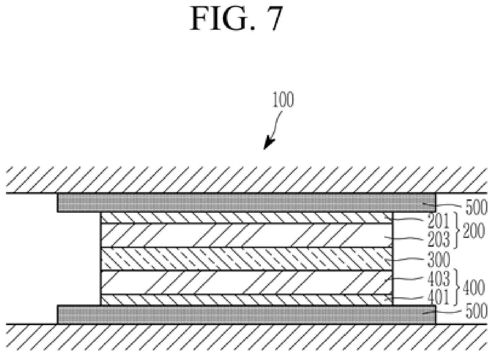

FIG. 1 is a schematic view of a composite 1 included in a second layer 12 in a solid electrolyte membrane 300 according to some embodiments and FIG. 2 is a schematic view of the solid electrolyte membrane 300 according to some embodiments. In addition, FIG. 3 is a schematic view of the movement path of lithium ions in the solid electrolyte membrane 300 that does not include the composite 1 and FIG. 4 is a schematic view of the lithium ion movement path in the second layer 12 according to some embodiments. FIG. 5 is a schematic perspective view of the solid electrolyte membrane 300 according to some embodiments and FIG. 6 is a schematic cross-sectional view of the second layer 12 in the solid electrolyte membrane 300 according to some embodiments. FIGS. 7 to 8 are schematic cross-sectional views of the all-solid-state rechargeable battery 100 according to some embodiments.

All-solid-state rechargeable batteries use no flammable organic dispersive medium and even if a short circuit occurs, may greatly reduce possibility of the fire or explosion but thus greatly increase safety, compared with lithium ion batteries. On the other hand, a solid electrolyte has a problem of having lower lithium ionic conductivity than a liquid electrolyte. In order to shorten an ion movement path in an electrode plate of the all-solid-state rechargeable batteries, there may be a method of forming holes or pores to fill the solid electrolyte therein or adding an additive increasing the lithium ionic conductivity. However, in the case of a method of forming holes or pores and filling the interior with a solid electrolyte, there is a limit to filling the interior thereof with the solid electrolyte without any gaps. The method of adding the additive increasing ionic conductivity also may cause a side reaction between the solid electrolyte and the additive or affect properties of slurry for forming an electrode layer and thus has a limit in selecting the additive.

In order to shorten the lithium ion movement path in the solid electrolyte membrane, there may be a method of a composite including diamagnetic particles in the core and a solid electrolyte in the shell, wherein the solid electrolyte itself has a core-shell structure, in the solid electrolyte membrane. However, because the composite having the core including diamagnetic particles itself has electrical conductivity, if used for the solid electrolyte membrane as it is, there may be a risk of internal short circuit of a cell.

Accordingly, some embodiments provide a solid electrolyte membrane that can shorten the movement path of lithium ions while suppressing the possibility of internal short circuit of the cell.

In order to improve ionic conductivity and high rate capability by shortening the movement path of lithium ions, the composite 1 shown in FIG. 1 is used as a material for the solid electrolyte membrane. In order to shorten the movement path of lithium ions, the composite 1 has a core-shell structure having a core 1a including diamagnetic particles and a shell 1b surrounding the core and including a solid electrolyte. As shown in FIG. 4, lithium ions 4 can shorten the movement path through the composite 1, thereby improving ionic conductivity and high rate capability. In comparison, as shown in FIG. 3, when the composite 1 is not included in the solid electrolyte membrane 300, the movement path of the lithium ions 4 is longer compared to FIG. 4, resulting in lower ionic conductivity.

When using this composite 1, it is necessary to reduce the risk of internal short circuit of the cell that may occur due to the inclusion of diamagnetic particles as the core 1a. For this purpose, as shown in FIG. 2, a first layer 11 including solid electrolyte particles and a third layer 13 including solid electrolyte particles are stacked on the upper and lower layers of the second layer 12, respectively, so that the layer containing the composite 1 may be disposed in the middle and thus a solid electrolyte membrane 300 may be designed into a triple layer.

According to some embodiments, in order to further improve the ionic conductivity and high rate capability of the all-solid-state rechargeable battery, the composite 1 itself can be designed to be non-spherical within the second layer 12 of the solid electrolyte membrane. Alternatively, the composite 1 can be made non-spherical within the second layer 12 and at the same time, the composite can be aligned in a direction perpendicular to or close to the perpendicular direction with respect to the plane direction of the solid electrolyte membrane.

However, in a general method of forming a solid electrolyte membrane by coating a slurry for forming a solid electrolyte membrane including the aforementioned non-spherical composite onto a substrate, the non-spherical composite 1 is randomly distributed in the second layer 12. Therefore, in order to align the non-spherical composite 1 in the second layer 12 in a direction perpendicular to or close to the perpendicular direction with respect to the plane direction of the solid electrolyte membrane 300, a method of applying a magnetic field after coating a slurry for forming a second layer including a non-spherical composite onto a substrate may be considered.

Herein, the reason why the alignment of the non-spherical composite is controlled by the magnetic field is because the non-spherical composite has diamagnetic properties. Because none of the currently known solid electrolytes have diamagnetic properties, in some embodiments, as shown in FIG. 1, a composite 1 having a core 1a including non-spherical diamagnetic particles is used, and thus the alignment of the composite 1 within the solid electrolyte membrane 300 can be controlled. For example, by aligning the composite 1 in the second layer 12 in a direction perpendicular to or close to the perpendicular direction with respect to the plane direction of the solid electrolyte membrane 300, the movement path of lithium ions within the solid electrolyte membrane can be shortened and the interfacial contact resistance between solid electrolytes can be reduced. Accordingly, the all-solid-state rechargeable battery 100 including the solid electrolyte membrane 300 according to some embodiments may have improved ionic conductivity and high rate capability.

Hereinafter, elements constituting the solid electrolyte membrane 300 according to some embodiments will be described in more detail.

Composite

The composite 1 has a core 1a-shell 1b structure and as shown in FIG. 1, the composite 1 includes the core 1a including diamagnetic particles; and a shell 1b surrounding the core 1a and including the solid electrolyte.

According to some embodiments, in the composite 1, the core 1a (or the diamagnetic particle included in the core) may be non-spherical. For example, the composite 1 may have an aspect ratio represented by Equation 1 of greater than 1.

[Equation 1]

$$\text{Aspect ratio} = \text{major axis length} / \text{minor axis length}$$

Such non-spherical diamagnetic particles and the composite 1 including the same may be aligned in a perpendicular direction or close to the perpendicular direction to a plane direction of the solid electrolyte membrane (e.g., at 50° to 130° with respect to the plane direction of the solid electrolyte membrane 300) by a magnetic field externally applied thereto. Herein, the plane direction X of the solid electrolyte membrane 300 represents a parallel direction to the surface of a wide side of the solid electrolyte membrane. FIG. 5 shows a perspective view of the solid electrolyte membrane 300 and the plane direction X of the solid electrolyte membrane 300. In addition, FIG. 6 shows a cross-sectional view of the second layer 12 included in the solid electrolyte membrane 300, and the plane direction (X) of the solid electrolyte membrane 300 and the direction (Y) perpendicular to the plane direction (X) are shown as lines, respectively.

According to some embodiments, as the aspect ratio represented by Equation 1 increases, the performance of the all-solid-state rechargeable battery including the solid electrolyte membrane may be improved. For example, an aspect ratio represented by Equation 1 may be greater than or equal to 1.1, greater than or equal to 1.2, greater than or equal to 1.3, greater than or equal to 1.5, greater than or equal to 2, or greater than or equal to 3. An upper limit of the aspect ratio represented by Equation 1 is not particularly limited but may be in a range of less than or equal to 5,000, less than or equal to 300, less than or equal to 100, less than or equal to 50, less than or equal to 20, or less than or equal to 10, considering convenience and cost savings in the manufacturing process. For example, an aspect ratio of the core 1a may be 1.1 to 20 or 1.5 to 10.

According to some embodiments, a major axis length of the composite 1 may be 1 $\mu$m to 50 $\mu$m or a minor axis length of the composite 1 may be 0.01 $\mu$m to 5 $\mu$m. Alternatively, an aspect ratio expressed by Equation 1, which is the ratio of the major axis length to the minor axis length of the composite 1, may be greater than 1. Herein, the major axis length and the minor axis length of the composite mean average values.

According to some embodiments, in the composite 1, the shell 1b may be formed to have a uniform thickness or may be formed to be non-uniform.

According to some embodiments, the composite 1 may satisfy one or more of Equations 2 and 3. In other words, Equation 2, Equation 3 may be satisfied, or both Equations 2 and 3 may be satisfied. In the above range, the alignment effect of the core 1a of the composite 1 and the lithium ion conduction effect of the shell 1b can be harmonized. Herein, in Equations 2 and 3, the units of the numerator and denominator need only match each other, so that the units of $A_1$, $A_2$, and B are not particularly limited.

$$[Equation\ 2]$$

$$0.1 \leq A_1/B \leq 100$$

$$[Equation\ 3]$$

$$0.01 \leq A_2/B \leq 10$$

In Equations 2 and 3, $A_1$ represents the major axis length of the core 1a, $A_2$ represents the minor axis length of the core 1a, and B represents a thickness of the shell 1b.

According to some embodiments, the major axis length of the core 1a may be 1 $\mu$m to 50 $\mu$m, 1 $\mu$m to 20 $\mu$m, 2 $\mu$m to 15 $\mu$m, or 3 $\mu$m to 12 $\mu$m. Alternatively, the minor axis length of the core 1a may be 10 nm to 5 $\mu$m, 100 nm to 5 $\mu$m, or 1 $\mu$m to 4 $\mu$m. Alternatively, the thickness of the shell 1b may be 100 nm to 10 $\mu$m, 100 nm to 5 $\mu$m, or 300 nm to 3 $\mu$m. In this range, an alignment effect by the core 1a and the lithium ionic conduction effect by the shell 1c may be harmonized. Herein, the major axis length of the core 1a, the minor axis length of the core 1a, and the thickness of the shell 1b mean average values. A method of measuring the major axis length of the core 1a, the minor axis length of the core 1a, and the thickness of the shell 1b may include, for example, cutting the solid electrolyte membrane 500 to obtain a cross-section specimen, as shown in FIG. 6, and taking its image with a scanning electron microscope (SEM) to examine the composite 1 in the second layer 12 of the solid electrolyte membrane 300. In other words, the major axis length of the core 1a, the minor axis length of the core 1a, and the thickness of the shell 1 may be obtained by measuring any ten composites 1 in one cross-section specimen and calculate each average value thereof.

Alternatively, in the composite 1, a weight ratio of the core 1a and the shell 1b may be 1:1 to 1:500, 1:2 to 1:100, 1:10 to 1:50. In this range, an alignment effect by the core 1a and the lithium ion conduction effect by the shell 1b can be harmonized.

According to some embodiments, the major axis length of the composite 1 in the solid electrolyte membrane 300 may be aligned in a perpendicular direction (Y) or close to the perpendicular direction (Y) to a plane direction (X) of the solid electrolyte membrane 300. As shown in FIG. 6, the alignment angle of the major axis length of the composite 1 with the plane direction (X) of the solid electrolyte membrane 300 may be obtained, with reference to the cross-section of the solid electrolyte membrane 300 (or the second layer 12), by measuring an angle of the major axis length of the composite 1, which is indicated by a line, with the plane direction (X) of the solid electrolyte membrane (or the second layer 12).

For example, the major axis of the composite 1 in the solid electrolyte membrane 300 may be aligned with an angle ranging from 50 ° to 130 ° with the plane direction (X) of the solid electrolyte membrane 300, from 70 ° to 110 °, or 85 ° to 95 ° or with a substantially perpendicular angle of 90 °, which is a direction (Y). Within the ranges, the lithium ion movement path in the solid electrolyte membrane may be effectively shortened, and interfacial contact resistance among the solid electrolyte may be reduced.

In the composite 1, the diamagnetic particles of the core 1a may have any non-spherical shape with an aspect ratio of greater than 1 satisfying Equation 1 without a particular limit. For example, the core 1a may include diamagnetic particles having a needle-shaped, sheet-shaped, or oval shape. Alternatively, the core 1a may include a carbon-based material selected from artificial graphite, natural graphite, graphene, carbon nanotubes (CNT), carbon fiber, carbon black, or a combination thereof as diamagnetic particles. Herein, the carbon nanotubes (CNTs) may be S-carbon nanotubes (Short length CNTs) or L-carbon nanotubes (Long length CNTs).

According to some embodiments, the shell 1b may include the solid electrolyte commonly known in the art. For example, the shell 1b may include the sulfide-based solid electrolyte, the oxide-based solid electrolyte, the halide-based solid electrolyte, or a solid electrolyte selected from a combination thereof. As a representative example, the solid electrolyte included in the shell 1b may include the sulfide-based solid electrolyte and the shell 1b of the composite 1 may include $Li_6PS_5Cl$, a type of argyrodite-type sulfide-based solid electrolyte. Herein, the description of the solid electrolyte particles in the first layer 11, the second layer 12, and the third layer 13 may be applied in the same way as the solid electrolyte usable in the shell 1b.

A content of the composite 1 may be 0.1 wt% to 50 wt%, 0.5 wt% to 40 wt%, 1 wt% to 30 wt%, or 5 wt% to 25 wt% based on a total weight of the second layer 12. Within this range, the effect of improving ionic conductivity and high rate characteristics according to the composite 1 may be further enhanced.

The solid electrolyte membrane 300 according to some embodiments, in order to reduce possibility of internal short circuit of the cell, as shown in FIG. 2, includes a first layer 11 including the solid electrolyte particles 2; a second layer 12 disposed on the first layer 11 and including the composite 1; and a third layer 13 disposed on the second layer 12 and including the solid electrolyte particles 2. In this way, a triple layer is designed to include the composite 1 having the core including the diamagnetic particles capable of having electrical conductivity in the second layer 12, an intermediate layer, resultantly securing safety of the cell battery.

## First Layer and Third Layer

The first layer 11 and the third layer 13 include the solid electrolyte particles 2. The first layer 11 and the third layer 13 include the solid electrolyte particles 2 to secure ionic conductivity of the solid electrolyte membrane, wherein the first layer 11 and the third layer 13 unlike the second layer 12 do not include the composite 1 and thus may suppress an internal short circuit caused from the composite 1 included in the second layer 12.

The solid electrolyte particles 2, which are included in the first layer 11 and the third layer 13, may include a commonly known solid electrolyte in the art, for example, one solid electrolyte selected from a sulfide-based solid electrolyte, an oxide-based solid electrolyte, a halide-based solid electrolyte, or a combination thereof.

Hereinafter, the solid electrolyte particles 2 included in the first layer 11 and the third layer 13 are described in detail.

## Sulfide-based Solid Electrolyte

For example, the sulfide-based solid electrolyte may include $Li_2S-P_2S_5$, $Li_2S-P_2S_5-LiX$ (X is a halogen element, for example I, or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are each an integer and Z is Ge, Zn, or Ga), $Li_2S-GeS_2$, $Li_2S-SiS_2-Li_3PO_4$, $Li_2S-SiS_2-Li_pMO_q$ (p and q are integers and M is P, Si, Ge, B, Al, Ga, or In), or a combination thereof.

Alternatively, the sulfide-based solid electrolyte may be obtained by, for example, mixing $Li_2S$ and $P_2S_5$ in a molar ratio of 50:50 to 90:10 or 50:50 to 80:20 and optionally performing heat-treatment. Within the above mixing ratio range, a sulfide-based solid electrolyte having excellent ionic conductivity may be prepared. The ionic conductivity may be further improved by adding $SiS_2$, $GeS_2$, $B_2S_3$, and the like as other components thereto.

Mechanical milling or a solution method may be applied as a mixing method of sulfur-containing raw materials for preparing a sulfide-based solid electrolyte. The mechanical milling is a method of mixing the starting materials into fine particles by placing them in a ball mill reactor and agitating them strongly. The solution method may be performed by mixing the starting materials in a solvent to obtain a solid electrolyte as a precipitate. In addition, in the case of heat-treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to some embodiments may be, for example, prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours and the second heat treatment may be performed for 5 hours to 20 hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. A temperature of the first heat treatment may be for example 150 °C to 330 °C or 200 °C to 300 °C and a temperature of the second heat treatment may be for example 380 °C to 700 °C, or 400 °C to 600 °C.

For example, the sulfide-based solid electrolyte particles may include argyrodite-type sulfide. The argyrodite-type sulfide-based solid electrolyte particle may have high ionic conductivity close to the range of $10^{-4}$ to $10^{-2}$ S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte membrane. An all-solid-state rechargeable battery including the same may have improved battery performance such as rate capability, coulombic efficiency, and cycle-life characteristics.

The argyrodite-type sulfide-based solid electrolyte particle may include, for example a compound represented by Chemical Formula 11.

[Chemical Formula 11] $\qquad (Li_aM^1_bM2_c)(P_dM3_e)(S_fM4_g)X_h$

In Chemical Formula 11, $4 \leq a \leq 8$, $M^1$ is Mg, Cu, Ag, or a combination thereof, $0 \leq b < 0.5$, M2 is Na, K, or a combination thereof, $0 \leq c < 0.5$, M3 is Sn, Zn, Si, Sb, Ge, or a combination thereof, $0 < d < 4$, $0 \leq e < 1$, $M^4$ is O, $SO_n$, or a combination thereof, $1.5 \leq n \leq 5$, $3 \leq f \leq 12$, $0 \leq g < 2$, X is F, Cl, Br, I, or a combination thereof, and $0 \leq h \leq 2$.

For example, in Chemical Formula 11, a halide element (X) may be necessarily included, and in this case, it may be expressed as $0 < h \leq 2$. For example, M1 element may be necessarily included in Chemical Formula 11, and in this case, it may be expressed as $0 < b < 0.5$. In Chemical Formula 11, $M^3$ may be understood as an element substituted for P and may be $0 < e < 1$. In Chemical Formula 11, M4 is substituted for S and, for example, may be $0 < g < 2$, and f, a ratio of S, may be, for example, $3 \leq f \leq 7$. If M4 is $SO_n$, $SO_n$ may be, for example $S_4O_6$, $S_3O_6$, $S_2O_3$, $S_2O_4$, $S_2O_5$, $S_2O_6$, $S_2O_7$, $S_2O_8$, $SO_4$, $SO_5$, or $SO_4$.

For example, in Chemical Formula 11, a+b+c+h=7, d+e=1, and f+g+h=6.

As a specific example, the argyrodite-type sulfide-based solid electrolyte particles may include $Li_3PS_4$, $Li_7P_3S_{11}$, $Li_7PS_6$, $Li_6PS_5Cl$, $Li_6PS_5Br$, $Li_{5.8}PS_{4.8}Cl_{1.2}$, Li6.2PS5.2Br0.8, Li5.75PS4.75Cl1.25, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, $Li_{5.75}P(S_{4.725}(SO_4)_{0.025})Cl_{1.25}$, or a combination thereof, but is not limited thereto.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment processes. The method of preparing the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particle, for example may be 0.1 $\mu$m to 5.0 $\mu$m, 0.1 $\mu$m to 3.0 $\mu$m, small particles of 0.1 $\mu$m to 1.9 $\mu$m, or large particles of 2.0 $\mu$m to 5.0 $\mu$m. Alternatively, the sulfide-based solid electrolyte particles may be a mixture of small particles having an average particle diameter of 0.1 $\mu$m to 1.9 $\mu$m and large particles having an average particle diameter of 2.0 $\mu$m to 5.0 $\mu$m. The average particle diameter of the sulfide-based solid electrolyte particles may be measured using an electron microscope image, and for example, a particle size distribution may be obtained by measuring the size (diameter or major axis length) of about 20 particles in a scanning electron microscope image, and D50 may be calculated therefrom.

Oxide-based Solid Electrolyte

The oxide-based solid electrolyte may include, for example, $Li_{1+x}Ti_{2-x}Al(PO_4)_3$ (LTAP) $(0 \leq x \leq 4)$, $Li_{1+x+y}Al_xTi_{2-x}Si_yP_{3-y}O_{12}$ $(0 < x < 2, 0 \leq y < 3)$, $BaTiO_3$, $Pb(Zr,Ti)O_3$ (PZT), $Pb_{1-x}La_xZr_{1-y}Ti_yO_3$ (PLZT) $(0 \leq x < 1, 0 \leq y < 1)$, $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, lithium phosphate ($Li_3PO_4$), lithium titanium phosphate ($Li_xTi_y(PO_4)_3$, $0 < x < 2, 0 < y < 3$), $Li_{1+x+y}(Al, Ga)_x(Ti, Ge)_{2-x}Si_yP_{3-y}O_{12}$ $(0 \leq x \leq 1, 0 \leq y \leq 1)$, lithium lanthanum titanate ($Li_xLa_yTiO_3$, $0 < x < 2, 0 < y < 3$), $Li_2O$, $LiAlO_2$, $Li_2O$-$Al_2O_3$-$SiO_2$-$P_2O_5$-$TiO_2$-$GeO_2$-based ceramics, Garnet-based ceramics $Li_{3+x}La_3M_2O_{12}$ (wherein M = Te, Nb, or Zr; x is an integer of 1 to 10), or a mixture thereof.

Halide-based Solid Electrolyte

The solid electrolyte membrane may include, for example the halide-based solid electrolyte. The halide-based solid electrolyte contains a halogen element as a main component, meaning that the ratio of the halide element to all elements constituting the solid electrolyte may be greater than or equal to 50 mol%, greater than or equal to 70 mol%, greater than or equal to 90 mol%, or 100 mol%. For example, the halide-based solid electrolyte may not contain a sulfur element.

The halide-based solid electrolyte may contain a lithium element, metal element other than lithium, and the halogen element. The metal element other than lithium may be Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, for example may be Cl, Br, or a combination thereof. The halide-based solid electrolyte, for example may be represented by $Li_aM_1X_6$ (M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof and X is F, Cl, Br, I, or a combination thereof, and $2 \leq a \leq 3$). The halide-based solid electrolyte may include, for example $Li_2ZrCl_6$, $Li_{2.7}Y_{0.7}Zr_{0.3}Cl_6$, $Li_{2.5}Y_{0.5}Zr_{0.5}Cl_6$, $Li_{2.5}In_{0.5}Zr_{0.5}Cl_6$, $Li_2In_{0.5}Zr_{0.5}Cl_6$, $Li_3YBr_6$, $Li_3YCl_6$, $Li_3YBr_2Cl_4$, $Li_3YbCl_6$, $Li_{2.6}Hf_{0.4}Yb_{0.6}Cl_6$, or a combination thereof, but is not limited thereto.

According to some embodiments, the solid electrolyte particles included in the first layer 11 and the third layer 13 may be the same or different from each other. Alternatively, the solid electrolyte particles 2 included in the first layer 11 and the third layer 13 may be the same or different from the solid electrolyte included in the shell 1b of the composite 1. For example, the shell 1b of the composite 1 may be composed of $Li_6PS_5Cl$ and solid electrolyte particles included in the first layer 11 and the third layer 13 may be composed of $Li_6PS_5Cl$.

According to some embodiments, the first layer 11 and the third layer 13 may each independently further include a binder as an optional component in addition to the aforementioned solid electrolyte particles and/or may further include other components such as an alkali metal salt, an ionic liquid, and a conductive polymer. Hereinafter, the components that may be additionally included in the first layer 11 and the third layer 13 are described in detail.

Binder

The first layer 11 and the third layer 13 may further include the binder. The binder serves to adhere the solid electrolyte particles 2 to each other within the first layer 11 and/or the third layer 13. Such a binder may include, for example a nitrile-butadiene rubber, a hydrogenated nitrile-butadiene rubber, a styrene-butadiene rubber, an acrylated styrene-butadiene rubber, an acrylonitrile-butadiene rubber, an acrylic rubber, a butyl rubber, a fluorine rubber, a natural rubber, polydimethylsiloxane, polyethylene oxide, polyvinylpyrrolidone, polyvinylpyridine, chlorosulfonated polyethylene, polyvinyl alcohol, polytetrafluoroethylene, polyvinylidene fluoride, a polyvinylidene fluoride-hexafluoro propylene copolymer, polyvinyl chloride, carboxylated polyvinyl chloride, polyvinyl fluoride, polyethylene, a polypropylene, an ethylene-propylene copolymer, an ethylene-propylene-diene copolymer, polyamideimide, polyimide, an acrylic resin, poly(meth)acrylate, polyacrylonitrile, polystyrene, polyurethane, a copolymer thereof, or a combination thereof.

The binder may be included in an amount of 0.1 wt% to 3 wt%, for example, 0.5 wt% to 2 wt% or 0.5 wt% to 1.5 wt% based on a total weight of each layer of the first layer 11 and the third layer 13. Within this range, the components in the solid electrolyte membrane can be well combined without reducing the ionic conductivity of the solid electrolyte, thereby improving durability and reliability of the battery.

Other Components

The first layer 11 and the third layer 13 may each further include one or more other components selected from alkali metal salts, ionic liquids, and conductive polymers as optional components.

For example, the alkali metal salt may be a lithium salt. The content of the lithium salt in the solid electrolyte layer may be greater than or equal to 1 M, for example 1 M to 4 M. In this case, the lithium salt may improve ionic conductivity by improving lithium ion mobility in the solid electrolyte layer. The lithium salt may be applied without type limitations, and may include, for example $LiPF_6$, $LiBF_4$, $LiSbF_6$, $LiAsF_6$, $LiClO_4$, $LiAlO_2$, $LiAlCl_4$, $LiPO_2F_2$, LiCl, LiI, LiSCN, $LiN(CN)_2$, lithium bis(oxalato)borate (LiBOB), lithium difluoro (oxalato)borate (LiDFOB), lithium difluorobis(oxalato)phosphate (LiDFBP), lithium bis(trifluoromethane sulfonyl)imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof.

For example, the lithium salt may be an imide-based lithium salt such as LiTFSI, LiFSI, LiBETI, or a combination thereof. The imide-based lithium salt may maintain or improve ionic conductivity by maintaining appropriate chemical reactivity with ionic liquids.

The ionic liquid has a melting point below room temperature, so it is in a liquid state at room temperature and refers to a salt or room temperature molten salt composed of ions alone.

The ionic liquid may be a compound including at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br-,

I-, BF$_4$-, SO$_4$-, CF$_3$SO$_3$-, (FSO$_2$)$_2$N-, (C$_2$F$_5$SO$_2$)2N-, (C$_2$F$_5$SO$_2$)(CF$_3$SO$_2$)N-, and (CF$_3$SO$_2$)$_2$N-.

The ionic liquid may be, for example one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

The first layer 11 and the third layer 13 may each have a weight ratio of solid electrolyte particles and the ionic liquid of 0.1:99.9 to 90:10, for example, 10:90 to 90:10, 20:80 to 90:10, 30:70 to 90:10, 40:60 to 90:10, or 50:50 to 90:10. If the above range is satisfied, the electrochemical contact area with the electrode is improved and ionic conductivity may be maintained or improved. Accordingly, the energy density, discharge capacity, rate characteristics, etc. of the all-solid-state rechargeable battery may be improved.

According to some embodiments, an average thickness of the first layer 11 may be the same as or different from an average thickness of the third layer 13. For example, an average thickness of the first layer 11 and the third layer 13 may be 10 µm to 200 µm, for example, 10 µm to 150 µm, 10 µm to 100 µm, 10 µm to 60 µm, 10 µm to 50 µm, 10 µm to 34 µm, or 13 µm to 34 µm, 15 µm to 34 µm, or 20 µm to 34 µm.

## Second Layer

As shown in FIG. 2, the second layer 12 is between the first layer 11 and the third layer 1 and the second layer 12 includes the composite 1 described above. By placing the composite 1 on the second layer 12, which is an intermediate layer, internal short circuit of the cell may be suppressed and safety of the battery may be ensured. According to some embodiments, the second layer 12 may further include the solid electrolyte particles 2 in addition to the aforementioned composite 1 described above.

The description of the solid electrolyte particles that can be included in the second layer 12 may be applied in the same way as the solid electrolyte particles in the shell 1b of the aforementioned composite 1 and the solid electrolyte particles in the first layer 11 and the third layer 13.

As some embodiments, the solid electrolyte particles 2 included in the second layer 12 may be the same s or different from the solid electrolyte included in the shell 1b of the composite 1, and solid electrolyte particles included in one or more of the first layer 11 and the third layer 13

For example, the shell 1b of the composite 1 may be made of Li$_6$PS$_5$Cl and the solid electrolyte particles included in the second layer 12 may be made of Li$_6$PS$_5$Cl. Alternatively, the solid electrolyte particles included in the first layer 11 and the third layer 13 may be composed of Li$_6$PS$_5$Cl and the solid electrolyte particles included in the second layer 12 may be composed of Li$_6$PS$_5$Cl .

Alternatively, the second layer 12 may further include the aforementioned binder as an optional component and/or may further include other components such as alkali metal salt, the ionic liquid, and the conductive polymer. Herein, the contents described above with respect to the first layer 11 and the third layer 13 are equally applicable to the binder and other components.

According to some embodiments, a content of the binder included in the second layer 12 may be 0.1 wt% to 3 wt%, for example 0.5 wt% to 2 wt%, or 0.5 wt% to 1.5 wt% based on a total weight of the second layer 12. Within this range, the components in the second layer 12 may be well combined without lowering the ionic conductivity of the solid electrolyte, and thus the durability and reliability of the battery may be improved.

According to some embodiments, a content of the solid electrolyte particles 2 included in the second layer 12 (that is, excluding the solid electrolyte included in the shell 1b of the composite 1 may be 50 wt% to 99.9 wt%, for example 60 wt% to 99.9 wt%, 65 wt% to 99.5 wt%, 70 wt% to 98 wt%, or 75 wt% to 97 wt% based on a total weight of the second layer 12.

According to some embodiments, an average thickness of the second layer 12 may be the same as or different from an average thickness of one or more of the first layer 11 and the third layer 13. For example, an average thickness of the second layer 12 may be greater than each average thickness of the first layer 11 and the third layer 13. For example, an average thickness of the second layer 12 may be in the range of 1.2 to 5 times, 1.3 to 4.8 times, 1.5 to 4.5 times, or 1.8 times to 4.5 times each average thickness of the first layer 11 and the third layer 13. Alternatively, an average thickness of the second layer 12 may be 10 µm to 200 µm, for example, 10 µm to 150 µm, 10 µm to 100 µm, 20 µm to 100 µm, 35 µm to 100 µm, 40 µm to 100 µm, 40 µm to 90 µm, or 50 µm to 80 µm. Within this range, ionic conductivity due to the composite 1 included in the second layer 12 can be effectively secured.

According to some embodiments, an average thickness of the first layer 11 and the third layer 13 may be 10 µm to 34 µm, respectively and an average thickness of the second layer 12 may be 35 µm to 100 µm.

## Manufacturing Method of Solid Electrolyte Membrane

Some embodiments provides a method of manufacturing the solid electrolyte membrane, which includes forming a first layer including solid electrolyte particles, forming a second layer including a composite on the first layer, forming a third layer including solid electrolyte particles on the second layer, wherein the composite includes a core including diamagnetic particles; and a shell surrounding the core and including a solid electrolyte.

The aforementioned description is about the method of manufacturing the solid electrolyte membrane according to some embodiments, and hereinafter, the overlapped description with that of the solid electrolyte membrane 300 will be omitted, but processes of manufacturing the solid electrolyte membrane according to some embodiments will be further described.

The formation of the second layer 12 may include manufacturing the composite 1, preparing slurry for forming the second layer 12 including the composite, and applying the slurry for forming the second layer 12 on the first layer 11. The slurry for forming the second layer 12 may further include the solid electrolyte particles 2 in addition to the composite 1, wherein the description of the solid electrolyte particles includable in the slurry for forming the second layer 12 may be equally applied herein and will not be repeated.

The slurry for forming the second layer 12 may be prepared by mixing the composite 1 and a second solvent. The second solvent is not particularly limited but may include any commonly known solvent capable of dispersing the composite 1. As a representative example, the second solvent may include octyl acetate, isobutyryl isobutyrate, xylene, toluene, benzene, hexane, or a combination thereof.

Alternatively, the slurry for forming the first layer 11 may further include one or more components selected from solid electrolyte particles 2, a binder, an alkali metal salt, ionic liquid, and a conductive polymer previously mentioned as components that can be included in the second layer 12. In addition, dispersants commonly known in the art (e.g., H-NBR, etc.) may be further added.

The aforementioned slurry for forming the second layer 12 may be coated on the first layer 11, and at this time, any method commonly known in the art may be used as an application method without limitation. For example, methods such as bar coating, spin coating, die coating, transfer coating, and spray coating may be used.

After coating the slurry for forming the aforementioned second layer, drying the applied slurry for forming the second layer may be further included. For example, the drying may be performed in a convection oven, and the drying temperature may be 30 °C to 100 °C, 35 °C to 95 °C, 40 °C to 90 °C, 45 °C to 80 °C, 48 °C to 75 °C, or 50 °C to 70 °C. Alternatively, the drying may be performed for 10 seconds to 20 minutes, 30 seconds to 15 minutes, 1 minute to 10 minutes, or 2 minutes to 8 minutes.

According to some embodiments, the method may further include applying a magnetic field to the slurry for forming the second layer 12 applied on any one of the first layer 11 and the third layer 13. If this is satisfied, the composite 1, which has been randomly distributed in the second layer 12, may have an alignment in which it is aligned in a direction perpendicular (Y) or close to the perpendicular direction (Y) with respect to the plane direction (X) of the solid electrolyte membrane 300.

For example, the magnetic field strength may be 0.1 T (Tesla) to 3 T or 0.5 T to 2 T. Alternatively, the application time of the magnetic field may be 0.1 seconds to 10 minutes, 30 seconds to 8 minutes, or 1 minute to 5 minutes. The temperature at which the magnetic field is applied is not particularly limited, but the higher the temperature, the weaker the magnetic field strength may be. The strength and the application time of the magnetic field may be appropriately controlled to effectively secure alignment of the composite 1 in the second layer 12.

After applying the magnetic field, the slurry for forming the second layer 12, to which the magnetic field is applied, may be further dried. Through the drying, the second layer 12 may be formed on either the first layer 11 or the third layer 13. For example, the drying may be performed in a convection oven, and the drying temperature may be 30 °C to 100 °C, 35 °C to 95 °C, 40 °C to 90 °C, 45 °C to 80 °C, 48 °C to 75 °C, or 50 °C to 70 °C. Or, the drying may be performed for 10 seconds to 20 minutes, 30 seconds to 15 minutes, 1 minute to 10 minutes, or 2 minutes to 8 minutes. Within this range, appropriate alignment of the composite 1 within the second layer 12 may be effectively secured.

Or, after drying the slurry for forming the second layer 12 to which a magnetic field is applied to form the second layer 12 on the first layer 11, the second layer 12 may be subsequently further compressed, wherein the drying, the compression, and the like may be performed under commonly known conditions in this technical field.

Alternatively, it may further include removing the substrate as needed after application of the magnetic field.

According to some embodiments, the composite 1 may be manufactured by preparing a mixed solution including the diamagnetic particles, the solid electrolyte particles, and a first solvent, drying the mixed solution, and heat-treating the dried product.

According to some embodiments, when preparing the composite 1, an addition ratio of the diamagnetic particles and the solid electrolyte particles may be 1:1 to 1:500, 1:2 to 1:100, or 1:10 to 1:50.

The first solvent is not particularly limited as any commonly known solvent can be used as long as it is capable of dispersing the diamagnetic particles and the solid electrolyte particles. However, as a representative example, acetonitrile may be used.

For example, drying of the applied slurry for forming the first layer may be performed at 80 °C to 150 °C, 90 °C to 140 °C, or 100 °C to 30 °C. Alternatively, the heat treatment may be performed at 200 °C to 600 °C, 250 °C to 550 °C, 300 °C to 500 °C, or 350 °C to 450 °C. Within this range, the composite 1 in which the alignment effect of the core 1a and the lithium ion conduction effect of the shell 1b are harmonized can be effectively manufactured.

The first layer 11 may be formed by preparing a slurry for forming the first layer 11 including solid electrolyte particles and a solvent and then coating it on the substrate or the already formed second layer 12. Herein, any commonly known solvent can be used as long as it can disperse the solid electrolyte particles 2, and thus there is no particular limitation, and octyl acetate may be used as a representative example. As a method for coating the slurry for forming the second layer, any method commonly known in the art may be used without limitation. For example, methods such as bar coating, spin coating, die coating, transfer coating, and spray coating may be used.

After coating the slurry for forming the first layer, the coated slurry for forming the second layer may be dried to form the first layer. Herein, the drying may be performed in a convection oven and the drying temperature may be 30 °C to 100 °C, or 35 °C to 95 °C, 40 °C to 90 °C, 45 °C to 80 °C, 48 °C to 75 °C, or 50 °C to 70 °C. Alternatively, the drying may be performed for 10 seconds to 20 minutes, 30 seconds to 15 minutes, 1 minute to 10 minutes, or 2 minutes to 8 minutes. Within this range, an appropriate alignment of the composite 1 within the second layer 12 may be effectively secured.

Alternatively, after drying the slurry for forming the first layer, rolling the first layer may be further included, if necessary. Herein, the rolling conditions may follow what is commonly known in the technical field.

Alternatively, if a substrate is used in forming the first layer, removing the substrate may be further included if necessary.

Alternatively, the slurry for forming the first layer 11 may further include one or more components selected from a binder, an alkali metal salt, ionic liquid, and a conductive polymer previously mentioned as components that can be included in the second layer 12. Alternatively, a dispersant commonly known in the art (e.g., H-NBR, etc.) may be added.

The third layer 13 may be formed by preparing a slurry for forming the third layer 13 including solid electrolyte particles and a solvent and then coating it on the substrate or the already formed second layer 12. . Herein, the solvent is not particularly limited as any commonly known solvent can be used as long as it can disperse the solid electrolyte particles 2, and octyl acetate may be used as a representative example.

After coating the slurry for forming the third layer, the coated slurry for forming the third layer may be dried to form the third layer. For example, the drying may be performed in a convection oven. The drying temperature may be 30 °C to 100 °C, 35 °C to 95 °C, 40 °C to 90 °C, 45 °C to 80 °C, 48 °C to 75 °C, or 50 °C to 70 °C. Alternatively, the drying may be performed for 10 seconds to 20 minutes, 30 seconds to 15 minutes, 1 minute to 10 minutes, or 2 minutes to 8 minutes.

Alternatively, it may further include drying the aforementioned slurry for forming the third layer to form the third layer 13 on the second layer 12, and then compressing the third layer 13, where the compressing conditions may follow what is commonly known in the technical field.

Alternatively, if a substrate is used in forming the third layer, removing the substrate may be further included if necessary.

Alternatively, the slurry for forming the third layer 13 may further include one or more components selected from a binder, an alkali metal salt, ionic liquid, and a conductive polymer previously mentioned as components that can be included in the second layer 12. Alternatively, a dispersant commonly known in the art (eg, H-NBR, etc.) may be added.

According to some embodiments, after forming the aforementioned third layer, the method may further include drying the stack in which the first layer, the second layer, and the third layer are stacked. For example, drying of the stack may be performed in a vacuum oven. For example, the drying temperature for the aforementioned stack may be higher than the drying temperature for each of the aforementioned first layer, the second layer, and the third layer. Alternatively, the drying temperature for the stack may be 50 °C to 150 °C, 60 °C to 130 °C, 0 °C to 120 °C, or 80 °C to 100 °C. Alternatively, the drying time for the stack may be 30 minutes to 10 hours, 40 minutes to 8 hours, or 1 hour to 5 hours. Within this range, the solid electrolyte membrane 300 in which the first layer, second layer, and third layer are stacked can be effectively manufactured.

## All-solid-state Rechargeable Battery

In some embodiments, an all-solid-state rechargeable battery including a positive electrode layer; a negative electrode layer; and the aforementioned solid electrolyte membrane between the positive electrode layer and the negative electrode layer is provided. Because the all-solid-state rechargeable battery includes the solid electrolyte membrane according to the aforementioned embodiment, it may ensure the safety of the battery by effectively suppressing internal short circuit of the cell while exhibiting excellent ionic conductivity and high rate capability.

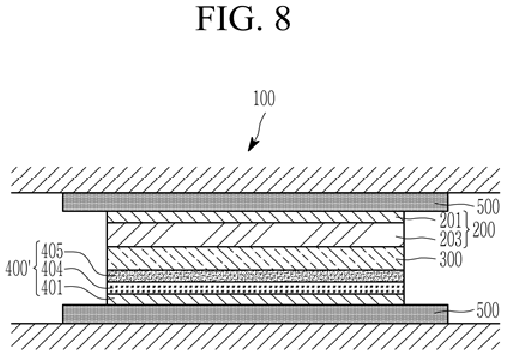

Hereinafter, descriptions that overlap with the above will be omitted, and the components of an all-solid-state rechargeable battery according to some embodiments, will be described in more detail with reference to FIGS. 7 and 8.

The all-solid-state rechargeable battery may be expressed as an all-solid-state battery or an all-solid rechargeable lithium battery.

FIG. 7 is a cross-sectional view of an all-solid-state battery according to some embodiments. Referring to FIG. 7, the all-solid-state battery 100 includes an electrode assembly in which a negative electrode layer 400 including a negative electrode current collector 401 and a negative electrode active material layer 403, a solid electrolyte membrane 300, and a positive electrode layer 200 including a positive electrode current collector 201 and a positive electrode active material layer 203 are stacked in a case such as a pouch. The all-solid-state battery 100 may further include an elastic layer 500 outside at least one of the positive electrode layer 200 and the negative electrode layer 400. Meanwhile, FIG. 7 shows one electrode assembly including a negative electrode layer 400, a solid electrolyte membrane 300, and a positive electrode layer 200, but an all-solid-state battery can also be manufactured by stacking two or more electrode assemblies.

## Positive Electrode Layer

The positive electrode layer may include, for example positive electrode current collector 201 and the positive electrode active material layer 203 on the positive electrode current collector 201.

The positive electrode current collector 201 may be selected from a group consisted of an aluminum foil, a nickel foil, a stainless steel foil, a titanium foil, nickel foam, copper foam, a polymer substrate coated with a conductive metal, and a combination thereof. The aluminum foil may be used as the positive electrode current collector, but is not limited thereto.

The positive electrode active material layer 203 may further include positive electrode active material, and may optionally include the solid electrolyte, the binder and/or conductive material.

Positive Electrode Active Material

As the positive electrode active material, a compound capable of reversible intercalation and deintercalation of lithium (lithiated intercalation compound) may be used. For example, one or more of a composite oxide of a metal selected from cobalt, manganese, nickel, and a combination thereof and lithium may be used.

The composite oxide may be a lithium transition metal composite oxide and specific examples include lithium nickel-based oxide, lithium cobalt-based oxide, lithium manganese-based oxide, lithium iron phosphate-based compound, cobalt-free nickel-manganese-based oxide, and lithium-excessive layered oxide, or a combination thereof. For example, the positive electrode active material may be a high nickel-based positive electrode active material having a nickel content of greater than or equal to 80 mol% based on 100 mol% of a metal excluding lithium in the lithium transition metal composite oxide. The content of nickel in the high nickel-based positive electrode active material may be greater than or equal to 85 mol%, greater than or equal to 90 mol%, greater than or equal to 91 mol%, or greater than or equal to 94 mol% and less than or equal to 99 mol% based on 100 mol% of a metal excluding lithium. The high-nickel-based positive electrode active materials can achieve high capacity and may be applied to high-capacity, high-density rechargeable lithium batteries.

As a more specific example, a compound represented by any of chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}CO_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$)

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; and Z is Cr, V, Fe, Sc, Y, or a combination thereof; and $L^1$ is Mn, Al, or a combination thereof.

The positive electrode active material may include, for example lithium nickel-based oxide represented by Chemical Formula 21, lithium cobalt-based oxide represented by Chemical Formula 22, a lithium iron phosphate-based compound represented by Chemical Formula 23, cobalt-free lithium nickel-manganese-based oxide represented by Chemical Formula 24, or a combination thereof.

[Chemical Formula 21] $\quad Li_{a1}Ni_{x1}M^1_{y1}M^2_{z1}O_{2-b1}X_{b1}$

In Chemical Formula 21, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, $0 \leq b1 \leq 0.1$, $M^1$ and $M^2$ are independently one or more element selected from Al, B, Ba, Ca, Ce, Co, Cr, Cu, Fe, Mg, Mn, Mo, Nb, Si, Sn, Sr, Ti, V, W, and Zr, and X is one or more element selected from F, P, and S.

In Chemical Formula 21, $0.6 \leq x1 \leq 1$, $0 \leq y1 \leq 0.4$, and $0 \leq z1 \leq 0.4$ or $0.8 \leq x1 \leq 1$, $0 \leq y1 \leq 0.2$, and $0 \leq z1 \leq 0.2$.

[Chemical Formula 22] $\quad Li_{a2}Co_{x2}M^3_{y2}O_{2-b2}X_{b2}$

In Chemical Formula 22, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, M3 is one or more element selected from Al, B, Ba, Ca, Ce, Cr, Cu, Fe, Mg, Mn, Mo, Ni, Se, Si, Sn, Sr, Ti, V, W, Y, Zn, and Zr, and X is one or more element selected from F, P, and S.

[Chemical Formula 23]     $Li_{a3}Fe_{x3}M^4_{y3}PO_{4-b3}X_{b3}$

In Chemical Formula 23, $0.9 \leq a3 \leq 1.8$, $0.6 \leq x3 \leq 1$, $0 \leq y3 \leq 0.4$, $0 \leq b3 \leq 0.1$, $M^4$ is one or more element selected from Al, B, Ba, Ca, Ce, Co, Cr, Cu, Mg, Mn, Mo, Ni, Se, Si, Sn, Sr, Ti, V, W, Y, Zn, and Zr, and X is one or more element selected from F, P, and S.

[Chemical Formula 24]     $Li_{a4}Ni_{x4}Mn_{y4}M^5_{z4}O_{2-b4}X_{b4}$

In Chemical Formula 24, $0.9 \leq a2 \leq 1.8$, $0.8 \leq x4 < 1$, $0 < y4 \leq 0.2$, $0 \leq z4 \leq 0.2$, $0.9 \leq x4+y4+z4 \leq 1.1$, $0 \leq b4 \leq 0.1$, $M^5$ is one or more element selected from Al, B, Ba, Ca, Ce, Cr, Fe, Mg, Mo, Nb, Si, Sn, Sr, Ti, V, W, and Zr, and X is one or more element selected from F, P and S.

An average particle diameter (D50) of the positive electrode active material may be 1 µm to 25 µm, for example 3 µm to 25 µm, 1 µm to 20 µm, 1 µm to 18 µm, 3 µm to 15 µm, or 5 µm to 15 µm. For example, the positive electrode active material may include small particles having an average particle diameter (D50) of 1 µm to 9 µm and large particles having an average particle diameter (D50) of 10 µm to 25 µm. The positive electrode active material having this particle size range can be harmoniously mixed with other components within the positive electrode active material layer and can achieve high capacity and high energy density. Herein, the average particle diameter means a diameter (D50) of particles having a cumulative volume of 50 volume% in the particle size distribution that is obtained by measuring the size (diameter or major axis length) of 20 particles at random in a scanning electron microscope image for positive electrode active materials.

The positive electrode active material may be in the form of secondary particles made by agglomerating a plurality of primary particles or in the form of single particles. Additionally, the positive electrode active material may have a spherical or close to spherical shape, or may have a polyhedral or irregular shape.

Meanwhile, the positive electrode active material may include a buffer layer on the particle surface. The buffer layer may be expressed as a coating layer, a protective layer, etc., and may serve to lower the interfacial resistance between the positive electrode active material and the sulfide-based solid electrolyte particles. For example, the buffer layer may include lithium-metal-oxide, wherein the metal is for example one or more element selected from Al, B, Ca, Ce, Cr, Fe, Mg, Mo, Nb, Si, Sn, Sr, Ta, V, W, and Zr. The lithium-metal-oxide improves the performance of the positive electrode active material by facilitating the movement of lithium ions and electronic conduction, and is improved for lowering the interfacial resistance between the positive electrode active material and solid electrolyte particles.

A content of the positive electrode active material may be within a range known in the art and is not particularly limited. For example, the positive electrode active material may be included in an amount of 55 wt% to 99 wt%, for example 65 wt% to 95 wt%, or 75 wt% to 91 wt% based on a total weight of the positive electrode active material layer.

Binder

The binder serves to adhere the positive electrode active material particles to each other and also to adhere the positive electrode active material to the positive electrode current collector 201. Examples of the binder may be one or more selected from polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, a (meth)acrylated styrene-butadiene rubber, polyacrylonitrile, polymethyl methacrylate, a vinylidene fluoride/hexafluoropropylene copolymer, an epoxy resin, a (meth)acrylic resin, a polyester resin, and nylon, but is not limited thereto.

Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

A content of the binder and the conductive material may be 0.1 wt% to 10 wt% or 0.1 wt% to 5 wt%, respectively, based on a total weight of the positive electrode active material layer 203.

The positive electrode active material layer 203 may, for example further include additives such as fillers, coating agents, dispersants, and ionic conductivity auxiliary agents in addition to the positive electrode active material, the binder, and the conductive material. As fillers, coating agents, dispersants, ionic conductive auxiliary agents, etc. that may be included in the positive electrode layer, known materials generally used in the positive electrode of all-solid-state rechargeable batteries can be used.

Solid Electrolyte

The positive electrode active material layer 203 may selectively include the solid electrolyte. The solid electrolyte may include, for example, a sulfide-based solid electrolyte, an oxide-based solid electrolyte, a halide-based solid electrolyte, or a combination thereof, and the specific descriptions thereof may be the same as the above descriptions in the solid electrolyte membrane 300. As a representative example, when the positive electrode active material layer 203 further includes a sulfide-based solid electrolyte, the ionic conductivity of the positive electrode layer can be further improved.

The solid electrolyte included in the positive electrode active material layer 203 may be applied in the same way as the solid electrolyte included in the shell 1b of the aforementioned composite 1, or the solid electrolyte particles included in the first to third layers 11 to 13 in the aforementioned solid electrolyte membrane 300.

The solid electrolyte included in the positive electrode active material 203 may be the same as the solid electrolyte included in the shell 1b of the aforementioned composite 1 or solid electrolyte particles included in the first layer 11 to the third layer 13. For example, when the shell 1b of the composite 1 is composed of $Li_6PS_5Cl$, the sulfide-based solid electrolyte included in the positive electrode active material layer 203 may also be composed of $Li_6PS_5Cl$.

In the positive electrode active material layer 203, a content of the solid electrolyte may be 0.5 wt% to 30 wt% or for example, 1 wt% to 5 wt% based on a total weight of the positive electrode active material layer 203. If the solid electrolyte is included in the positive electrode active material layer 203 in this amount, the efficiency and cycle-life characteristics of the all-solid-state rechargeable battery can be improved without reducing the capacity.

## Negative Electrode Layer

The negative electrode layer may include, for example the current collector and the negative electrode active material layer on the current collector. The negative electrode active material layer includes a negative electrode active material and may further include a binder, a conductive material, and/or a solid electrolyte.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, $SnO_2$, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with $SiO_2$. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resin such as phenol resin, furan resin, and polyimide resin may be used. Herein, a content of silicon may be 10 wt% to 50 wt% based on a total weight of the silicon-carbon composite. Additionally, the content of crystalline carbon may be 10 wt% to 70 wt% based on a total weight of the silicon-carbon composite and the content of amorphous carbon may be 20 wt% to 40 wt% based on a total weight of the silicon-carbon composite. Additionally, a thickness of the amorphous carbon coating layer may be 5 nm to 100 nm.

An average particle diameter (D50) of the silicon particle may be 10 nm to 20 $\mu$m or for example 10 nm to 500 nm. The silicon particles may be present in an oxidized form, and at this time, an atomic content ratio of Si:O in the silicon particle indicating a degree of oxidation may be 99:1 to 33:67. The silicon particles may be $SiO_x$ particles and in this case, the range of x in $SiO_x$ may be greater than 0 and less than 2. An average particle diameter (D50) may be measured by a microscope image or a particle size analyzer, and may mean a diameter of particles having a cumulative volume of 50 volume% in a particle size distribution.

The Si-based negative electrode active material or Sn-based negative electrode active material may be mixed with the carbon-based negative electrode active material. A mixing ratio of the Si-based negative electrode active material or Sn-based negative electrode active material with the carbon-based negative electrode active material may be a weight ratio of 1:99 to 90:10.

A content of the negative electrode active material in the negative electrode active material layer may be 95 wt% to 99 wt% based on a total weight of the negative electrode active material layer.

In some embodiments, the negative electrode active material layer may further include the binder and may optionally include the conductive material. A content of the binder in the negative electrode active material layer may be 1 wt% to 5 wt% based on a total weight of the electrode active material layer. In addition, if the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may include a water-insoluble binder, a water-soluble binder, or a combination thereof.

The water-insoluble binder may include, for example polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber, an acrylonitrile-butadiene rubber, an acryl rubber, a butyl rubber, a fluorine rubber, and a combination thereof. The polymer resin binder may be selected from polyethyleneoxide, polyvinylpyrrolidone, polyepichlorohydrin, polyphosphazene, polyacrylonitrile, ethylenepropylenedienecopolymer, polyvinylpyridine, chlorosulfonatedpolyethylene, latex, a polyester resin, an acrylic resin, a phenol resin, an epoxy resin, polyvinyl alcohol, and a combination thereof.

When a water-soluble binder is used as the negative electrode layer binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, an alkali metal salt thereof, or a combination thereof. The alkali metal may be Na, K, or Li. An amount of the thickener used may be 0.1 parts by weight to 3 parts by weight based on 100 parts by weight of the negative electrode active material.

The conductive material is included to impart conductivity to the electrode, and may include, for example a carbon-based material such as natural graphite, artificial graphite, carbon black, acetylene black, ketjen black, a carbon fiber, a carbon nanotube, and the like; a metal-based material of a metal powder or a metal fiber including copper, nickel, aluminum, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

For example, the negative electrode layer may be a precipitation-type negative electrode layer. The precipitation-type negative electrode layer may be a negative electrode layer which has no negative electrode active material during the assembly of a battery but in which a lithium metal and the like are precipitated during the charge of the battery and serve as a negative electrode active material.

FIG. 8 is a schematic cross-sectional view including the precipitation-type negative electrode layer. Referring to FIG. 78 the precipitation-type negative electrode layer 400' may include a negative electrode current collector 401 and a negative electrode coating layer 405 on the current collector. The all-solid-state battery having this precipitation-type negative electrode layer 400' starts to be initially charged in absence of a negative electrode active material, and a lithium metal with high density and the like are precipitated between the current collector 401 and the negative electrode catalyst layer 405 during the charge and form a lithium metal layer 404, which may work as a negative electrode active material. Accordingly, the precipitation-type negative electrode layer 400', in the all-solid-state battery which is more than once charged, may include the current collector 401, the lithium metal layer 404 on the current collector, and the negative electrode catalyst layer 405 on the metal layer 404. The lithium metal layer 404 means a layer of the lithium metal and the like precipitated during the charge of the battery and may be called to be a metal layer, a negative electrode active material layer, or the like.

The negative electrode coating layer 405 may include a lithophilic metal that acts as a catalyst, a carbon material, or a combination thereof.

The metal may include, for example, gold, platinum, palladium, silicon, silver, aluminum, bismuth, tin, zinc, or a combination thereof, and may be composed of one of these or various types of alloys. When the metal exists in particle form, its average particle diameter (D50) may be less than or equal to about 4 $\mu$m or for example, 10 nm to 4 $\mu$m.

The carbon material, for example may be crystalline carbon, amorphous carbon, or a combination thereof. The crystalline carbon may be for example natural graphite, artificial graphite, mesophase carbon microbeads, or a combination thereof. The amorphous carbon may be for example carbon black, activated carbon, acetylene black, denka black, ketjen black, or a combination thereof.

When the negative electrode coating layer 405 includes the metal and the carbon material, the metal and the carbon material may be, for example, mixed in a weight ratio of 1:10 to 2:1. Herein, the precipitation of the lithium metal may be effectively promoted and improve characteristics of the all-solid-state battery. The negative electrode coating layer 405 may include, for example, a carbon material on which a catalyst metal is supported or a mixture of metal particles and carbon material particles.

The negative electrode coating layer 405 may include, for example, the metal and amorphous carbon, and in this case, the deposition of lithium metal may be effectively promoted.

The negative electrode coating layer 405 may further include the binder and the binder may be the conductive binder. Additionally, the negative electrode coating layer 405 may further include general additives such as a filler, a dispersant, and an ionic conductive agent.

A thickness of the negative electrode coating layer 405, for example may be 100 nm to 20 $\mu$m, 500 nm to 10 $\mu$m, or 1 $\mu$m to 5 $\mu$m.

The precipitation-type negative electrode layer 400' may further include a thin film, for example, on the surface of the current collector, that is, between the current collector and the negative electrode catalyst layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state battery. The thin film may be formed by, for example vacuum deposition, sputtering, or plating methods. A thickness of the thin film, for example may be 1 nm to 500 nm.

The all-solid-state rechargeable battery may be a unit cell having a structure of a positive electrode layer/solid electrolyte membrane/negative electrode layer, a bicell having a structure of a negative electrode layer/solid electrolyte membrane/positive electrode layer/solid electrolyte membrane/negative electrode layer, or a stacked battery in which the unit battery structure is repeated.

The shape of the all-solid-state rechargeable battery is not particularly limited, and may be, for example, coin-shaped, button-shaped, sheet-shaped, stacked-shaped, cylindrical, flat, etc. Additionally, the all-solid-state battery may also be applied to large batteries used in electric vehicles, etc. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool.

Hereinafter, examples and comparative examples are described. It is to be understood, however, that the examples are for the purpose of illustration and are not to be construed as limiting the present invention.

**Example 1**

(1) Preparation of Composite

As diamagnetic particles, needle-shaped artificial graphite with an aspect ratio: 4.0, a minor axis length: 1 $\mu$m, and a major axis length: 4 $\mu$m was prepared. In addition, $Li_2S$, $P_2S_5$, and LiCl as raw materials for a solid electrolyte, were mixed in a mole ratio of 5:1:2. The solid electrolyte raw material mixture and the diamagnetic particles were mixed in a weight ratio of 30:1 under a solvent of acetonitrile and then, magnetically stirred for 2 hours, dried at 120 °C, and heat-treated at 400 °C. Accordingly, a solid electrolyte composite including a core containing the needle-shaped artificial graphite; and a shell including the $Li_6PS_5Cl$ solid electrolyte surrounding the core was obtained.

(2) Preparation of Slurry for Forming Second Layer

20 wt% of the composite, 78.3 wt% of the $Li_6PS_5Cl$ solid electrolyte particles (D50 = 3 $\mu$m) as argyrodite-type crystals, 1.3 wt% of an acryl-based binder (SX-A334, Zeon Co., Ltd.), and 0.4 wt% of a dispersant (H-NBR) were added under a solvent of octyl acetate and then, mixed with a Thinky mixer to prepare slurry for a second layer.

(3) Manufacture of First Layer

An acryl-based binder (SX-A334, Zeon Co., Ltd.) was added to octyl acetate to prepare an acryl-based binder solution with 4 wt% of the binder. The acryl-based binder solution was added to the $Li_6PS_5Cl$ solid electrolyte particles (D50 = 3 $\mu$m), argyrodite-type crystals, and then, mixed with the Thinky mixer to prepare slurry. The slurry included 1.5 parts by weight of the acryl-based binder based on 98.5 parts by weight of the solid electrolyte. The prepared slurry was coated on a non-woven fabric with a bar coater and dried at 50 °C in a convection oven for 5 minutes, obtaining a stack.

(4) Manufacture of Second Layer

The prepared slurry for forming a second layer was applied on the above first layer by using a bar coater, and a magnetic field was applied thereto at strength of 1 T for 2 minutes at 25 °C. After applying the magnetic field thereto, the slurry to which the magnetic field was applied was dried at 50 °C in a convection oven for 5 minutes. Through the above process, a stack having a second layer formed on the first layer was manufactured.

(5) Manufacture of Third Layer

Subsequently, an acryl-based binder (SX-A334, Zeon Co., Ltd.) was added to octyl acetate to prepare a acryl-based binder solution with 4 wt% of the binder. The acryl-based binder solution was added to the $Li_6PS_5Cl$ solid electrolyte particles (D50= 3 $\mu$m), argyrodite-type crystals and then, mixed with a Thinky mixer to prepare slurry for a third layer. The slurry for a third layer included 1.5 parts by weight of the acryl-based binder based on 98.5 parts by weight of the solid electrolyte. The prepared slurry for a third layer was coated on the second layer with a bar coater and then, dried at 50 °C in a convection oven for 5 minutes, obtaining a stack having first layer-the second layer-third layer in order.
Subsequently, the stack was dried at 80 °C in a vacuum oven for 2 hours or more, manufacturing a solid electrolyte membrane 300.

(6) Manufacture of Positive Electrode Layer

Positive electrode slurry was prepared by using octyl acetate of a solvent and mixing 13.5 wt% of a $Li_6PS_5Cl$ solid electrolyte (D50 = 3 $\mu$m), argyrodite-type crystals, 85 wt% of a positive electrode active material ($LiNi_{0.8}Co_{0.1}Al_{0.1}O_2$), 1.0 wt% of a PVDF binder, and 0.5 wt% of carbon nanotube. The positive electrode slurry was coated on one surface of an aluminum foil of a positive electrode current collector and then, dried and compressed to manufacture a positive electrode.

(7) Manufacture of Negative Electrode Layer

As a negative current collector, a 12.5 $\mu$m-thick nickel foil was prepared. In addition, as a material for forming a negative electrode coating layer, carbon black (CB) with a D50 particle diameter of about 30 nm and silver (Ag) particles with a D50 particle diameter of about 60 nm were prepared.
The carbon black (CB) and the silver (Ag) particles were mixed in a weight ratio of 3:1, and after adding 0.25 g of the mixed powder to a container, 2 g of a NMP solution including 7 wt% of a PVDF binder (#9300, Kureha Corp.) was added thereto, preparing a mixed solution. Subsequently, the mixed solution was stirred, while NMP was little by little added thereto, preparing slurry. The prepared slurry was coated on a nickel foil with a bar coater and dried at 80 °C in a convection oven for 10 minutes, obtaining a stack. The obtained stack was vacuum-dried at 100 °C for 8 hours or more, that is, for 10 hours. Through the aforementioned process, a negative electrode layer, in which a negative electrode coating layer was formed on the negative current collector, was manufactured.

(6) Manufacture of All-solid-state Rechargeable Battery

The solid electrolyte membrane 300 was disposed between the positive electrode layer and the negative electrode layer to prepare a stack. The prepared stack was hot plate-pressed at 80 °C for 30 minutes at a pressure of 500 MPa, manufacturing an all-solid-state rechargeable battery cell. Through this pressure treatment, the solid electrolyte membrane was sintered, improving battery characteristics. The pressed positive electrode active material layer had a thickness of about 103 $\mu$m, the negative electrode coating layer had a thickness of 7 $\mu$m, and the solid electrolyte membrane had a thickness of 60 $\mu$m.
Additionally, the solid electrolyte membrane 300, in which the first layer 11, the second layer 12, and the third layer 13 in order were stacked, was prepared into a cross-section specimen, which was taken an image of with a scanning electron microscope (SEM). When measured with SEM, the first layer had an average thickness of 30 $\mu$m, the second layer had an average thickness of 60 $\mu$m, and the third layer had an average thickness of 30 $\mu$m. Herein, each average thickness of the first layer, the second layer, and the third layer was obtained by measuring a thickness at any ten points at equal intervals and calculating their average value.
In the cross-section specimen, any 10 composites in the second layer 12 were randomly selected to measure each shell thickness of the composites and then, calculate an average shell thickness, which was 0.5 $\mu$m.

**Comparative Example 1**

A solid electrolyte membrane and an all-solid-state rechargeable battery cell were manufactured substantially in the same manner as in Example 1 except that the solid electrolyte membrane was formed as a monolayer including solid electrolyte particles ($Li_6PS_5Cl$) alone instead of the triple layered one.

**Comparative Example 2**

A solid electrolyte membrane and an all-solid-state rechargeable battery cell were manufactured substantially in the same manner as in Example 1 except that the slurry for a second layer was prepared only by using needle-shaped artificial graphite with an aspect ratio: 4.0, a minor axis length: 1 $\mu$m, and a major axis length: 4 $\mu$m without forming the shell instead of the composite.

**Comparative Example 3**

A solid electrolyte membrane and an all-solid-state rechargeable battery cell were manufactured substantially in the same manner as in Example 1 except that the composite was prepared by using needle-shaped artificial graphite with an aspect ratio: 1.0, a minor axis length: 3.5 $\mu$m, and a major axis length: 3.5 $\mu$m without forming the shell.

For reference, Table 1 shows that structures of the solid electrolytes (or composite) of Example 1 and Comparative Examples 1 to 3, structures of the solid electrolyte membranes, shapes of the diamagnetic particles, aspect ratios of the diamagnetic particles, minor and major axis lengths of the diamagnetic particles, and a core and shell weight ratios of the composite.

(Table 1)

| | Structure of solid electrolyte (or composite) | Solid electrolyte membrane structure | Diamagnetic particles | | | | Weight ratio of core: solid electrolyte shell |
| --- | --- | --- | --- | --- | --- | --- | --- |
| | | | Shape | aspect ratio | Minor axis length | Major length | |
| Example 1 | diamagnetic particles core-solid electrolyte shell | triple layer | needle-shaped | 4.0 | 1 $\mu$m | 4 $\mu$m | 1:30 |
| Comparative Example 1 | solid electrolyte alone | monolayer | irregular shaped | - | - | - | - |
| Comparative Example 2 | diamagnetic particles alone | triple layer | needle-shaped | 4.0 | 1 $\mu$m | 4 $\mu$m | - |
| Comparative Example 3 | diamagnetic particles alone | triple layer | spherical shape | 1.0 | 3.5 $\mu$m | 3.5 $\mu$m | - |

**Evaluation Example 1: Ionic Conductivity of Positive Electrode Layer**

Each of the solid electrolyte membranes of the examples and the comparative examples was evaluated with respect to ionic conductivity.

Specifically, each of the solid electrolyte membranes of the examples and the comparative examples was placed in a mold with a diameter of 10 mm and then, pressed at a pressure of 350 mPa into a pellet. On both sides of the pellet, an indium (In) thin film was coated to prepare a sample for measuring the ionic conductivity. The sample was measured with respect to impedance by using AUTOLAB PGSTAT30 (Metrohm Autolab Co. Ltd.), a potentiostat, to draw a Nyquist plot, from which the ionic conductivity at 45 °C was measured. The results are shown in Table 2 below.

(Table 2)

| | Ionic conductivity (mS/cm) (@ 45 °C) |
| --- | --- |
| Example 1 | 0.41 |
| Comparative Example 1 | 0.34 |
| Comparative Example 2 | 0.4 |
| Comparative Example 3 | 0.32 |

Referring to Table 2, the solid electrolyte membrane of Example 1 exhibited higher ionic conductivity than the solid electrolyte membranes of Comparative Examples 1 to 3.

In Example 1, the solid electrolyte membrane was manufactured by using a composite with a core-shell structure including a core including diamagnetic particles with an aspect ratio of greater than 1; and a shell surrounding the core and including a solid electrolyte. Accordingly, as a magnetic field was applied to the manufacturing process of Example 1, the composite was aligned within a range of 50 ° to 130 ° with a plane direction of the solid electrolyte membrane in the second layer 12 of the solid electrolyte membrane. The alignment of the composite was checked by manufacturing a cross-section specimen of the solid electrolyte membrane, which was taken an image of with a scanning electron microscope (SEM) to measure an alignment angle of any 10 composites and calculate their average value. In the above solid electrolyte membrane, as the composites were aligned, a lithium ion path was shortened in the solid electrolyte membrane according to Example 1, and high ionic conductivity was secured.

On the contrary, Comparative Example 1 was a case of using a monolayered solid electrolyte membrane instead of the 3-layered solid electrolyte membrane of Example 1 and an amorphous solid electrolyte itself instead of the composite of Example 1. Accordingly, during the manufacturing the solid electrolyte membrane of Comparative Example 1, even though a magnetic field was applied thereto, the amorphous solid electrolyte in the solid electrolyte membrane was not specifically but randomly aligned.

Comparative Example 2 was a case of using needle artificial graphite alone without the solid electrolyte shell instead of the composite in the second layer of Example 1. Accordingly, when a magnetic field was applied during the manufacturing process of the solid electrolyte membrane according to Comparative Example 2, the needle-shaped artificial graphite having no the solid electrolyte shell was almost vertically aligned in the second layer of the solid electrolyte membrane. However, in Comparative Example 2, because the solid electrolyte shell was not formed, there was a problem of battery safety in Evaluation Example 2.

On the other hand, in the solid electrolyte membrane of Comparative Example 3, even though a magnetic field was applied thereto, the composite exhibited no alignement. Accordingly, compared with Comparative Example 1, there was no ionic conductivity increase effect.

**Evaluation Example 2: Evaluation of High Rate Capability and Internal Short Circuit Occurrence of All-solid-state Rechargeable Battery**

For each all-solid-state rechargeable battery of Examples and Comparative Examples, high-rate characteristics were evaluated.

Specifically, the all-solid-state rechargeable battery cells of the examples and the comparative examples were charged under constant current to 4.25 V at 0.1 C and discharged under constant current to 2.5 V at 0.1 C (first cycle); charged under constant current to 4.25 V at 0.1 C and discharged under constant current to 2.5 V at 0.33 C (second cycle); charged under constant current to 4.25 V at 0.1 C and discharged under constant current to 2.5 V at 0.1 C (third cycle) at 45 °C in a thermostat to evaluate discharge capacity and high rate capability.

The discharge capacity and high rate capability at each cycle are shown in Table 2. Herein, the high rate capability was defined according to Equation 4.

High rate capability [%] = [Discharge capacity in the 3rd cycle (1C rate) / Discharge capacity in the 1st cycle (0.1C rate)] $\times$ 100[%]      [Equation 4]

In addition, at the above charge and discharge cycles, when no internal short circuit occurred, 'X' was given, but when an internal short circuit occurred, 'O' was given, and the results are shown in Table 3.

(Table 3)

| | 0.1 C discharge capacity (mAh/g) | 0.33 C discharge capacity (mAh/g) | 1 C discharge capacity (mAh/g) | High rate capability (%) | Internal Short Circuit Occurrence |
|---|---|---|---|---|---|
| Example 1 | 197 | 184 | 172 | 87.3 | X |
| Comparative Example 1 | 195 | 183 | 168 | 86.2 | X |
| Comparative Example 2 | - | - | - | - | O |
| Comparative Example 3 | - | - | - | - | O |

Referring to Table 3, Example 1, compared with Comparative Examples 1 to 3, exhibited excellent high rate capability as well as excellent discharge capacity at each cycle and no internal short circuit. Accordingly, as the solid electrolyte membrane was formed as a triple layer by using the composite as shown in Example 1, high rate capability of an all-solid-state rechargeable battery cell was improved, and there was an effect of suppressing an internal short circuit.

On the contrary, the cell of Comparative Example 1 exhibited no internal short circuit but as confirmed in Evaluation Example 1, low ionic conductivity, and the cells of Comparative Examples 2 and 3 exhibited an internal short circuit.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**<Description of Symbols>**

1: composite, 1a: core, 1b: shell, 2: solid electrolyte particle, 4: lithium ion, 11: first layer, 12: second layer, 13: third layer, 100: all-solid-state rechargeable battery, 200: positive electrode layer, 201: positive electrode current collector, 203: positive electrode active material layer, 300: solid electrolyte membrane, 400: negative electrode layer, 400': precipitation-type negative electrode layer, 401: negative current collector, 403: negative electrode active material layer, 404: lithium metal layer, 405: negative electrode coating layer, 500: elastic layer

**Claims**

1.  A solid electrolyte membrane, comprising

    a first layer including solid electrolyte particles;
    a second layer on the first layer and including a composite; and
    a third layer on the second layer and including solid electrolyte particles,
    wherein the composite includes a core including diamagnetic particles; and a shell surrounding the core and including a solid electrolyte.

2.  The solid electrolyte membrane as claimed in claim 1, wherein
    the diamagnetic particle has an aspect ratio greater than 1 represented by Equation 1:

    [Equation 1]

    aspect ratio = major axis length /minor axis length.

3.  The solid electrolyte membrane as claimed in claim 2, wherein
    the major axis of the composite is aligned in the range of 50 ° to 130 ° with respect to a plane direction of the solid electrolyte membrane.

4.  The solid electrolyte membrane as claimed in claim 1, wherein
    the composite includes the core and the shell at a weight ratio of 1:1 to 1:500.

5.  The solid electrolyte membrane as claimed in claim 1, wherein
    the diamagnetic particle is needle-shaped, plate-shaped, or oval-shaped.

6.  The solid electrolyte membrane as claimed in claim 1, wherein
    the core includes a carbon-based material selected from artificial graphite, natural graphite, graphene, a carbon nanotube (CNT), a carbon fiber, carbon black, or a combination thereof as diamagnetic particles.

7.  The solid electrolyte membrane as claimed in claim 1, wherein
    the shell includes sulfide-based solid electrolyte, oxide-based solid electrolyte, halide-based solid electrolyte, or solid electrolyte selected from a combination thereof.

8.  The solid electrolyte membrane as claimed in claim 1, wherein

the composite satisfies one or more of Equations 2 and 3:

[Equation 2]

$$0.1 \leq A_1/B \leq 100$$

[Equation 3]

$$0.01 \leq A_2/B \leq 10$$

wherein in Equations 2 and 3, $A_1$ represents a major axis length of the core, $A_2$ represents a minor axis length of the core, and B represents a thickness of the shell.

9. The solid electrolyte membrane as claimed in claim 1, wherein
the second layer further includes solid electrolyte particles.

10. The solid electrolyte membrane as claimed in claim 1, wherein
the solid electrolyte particles are the sulfide-based solid electrolyte particles.

11. The solid electrolyte membrane as claimed in claim 1, wherein

a major axis length of the core is 1 $\mu$m to 50 $\mu$m, and
a minor axis length of the core is 10 nm to 5 $\mu$m.

12. The solid electrolyte membrane as claimed in claim 1, wherein
the composite is included in an amount of 0.1 wt% to 50 wt% based on a total weight of the second layer.

13. The solid electrolyte membrane as claimed in claim 1, wherein

an average thickness of the first layer is 10 $\mu$m to 200 $\mu$m, and
an average thickness of the third layer is 10 $\mu$m to 200 $\mu$m.

14. The solid electrolyte membrane as claimed in claim 1, wherein
an average thickness of the second layer is greater than each average thickness of the first layer and the third layer.

15. The solid electrolyte membrane as claimed in claim 1, wherein
an average thickness of the second layer is in a range of 1.2 to 5 times an average thickness of the first layer and the third layer.

16. The solid electrolyte membrane as claimed in claim 1, wherein

an average thickness of the first layer is 10 $\mu$m to 34 $\mu$m,
an average thickness of the second layer is 35 $\mu$m to 100 $\mu$m, and
an average thickness of the third layer is 10 $\mu$m to 34 $\mu$m.

17. The solid electrolyte membrane as claimed in claim 1, wherein
a content of the binder included in the second layer is 0.1 wt% to 3 wt% based on a total weight of the second layer.

18. The solid electrolyte membrane as claimed in claim 1, wherein
a content of the solid electrolyte particle included in the second layer is 50 wt% to 99.9 wt% based on a total weight of the second layer.

19. A method of preparing a solid electrolyte membrane, comprising

forming a first layer including solid electrolyte particles,
forming a second layer including a composite on the first layer, and
forming a third layer including solid electrolyte particles on the second layer,

wherein the composite includes a core including diamagnetic particles; and a shell surrounding the core and including solid electrolyte.

20. The method of preparing the solid electrolyte membrane as claimed in claim 19, wherein

the forming of the second layer includes,
preparing the core including diamagnetic particles; and the shell surrounding the core and including solid electrolyte,
preparing a slurry for forming the second layer including the composite, and
coating the slurry for forming the second layer on the first layer.

21. The method of preparing the solid electrolyte membrane as claimed in claim 20, wherein
the method further includes applying a magnetic field to the slurry for forming the second layer coated on the first layer.

22. The method of preparing the solid electrolyte membrane as claimed in claim 21, wherein
the method further includes drying the slurry for forming the second layer to which the magnetic field is applied.

23. The method of preparing the solid electrolyte membrane as claimed in claim 19, wherein

the preparing the composite includes,
mixing the diamagnetic particles, a solid electrolyte, and a first solvent to prepare a mixed solution,
drying the mixed solution, and
heat-treating the dried product.

24. The method of preparing the solid electrolyte membrane as claimed in claim 20, wherein
the slurry for forming the second layer is prepared by mixing the composite and a second solvent.

25. The method of preparing the solid electrolyte membrane as claimed in claim 21, wherein
a magnetic field strength is 0.1 T to 3 T.

26. The method of preparing the solid electrolyte membrane as claimed in claim 21, wherein
an application time of the magnetic field is 0.1 second to 10 minutes.

27. The method of preparing the solid electrolyte membrane as claimed in claim 19, wherein

the method further includes, after forming the third layer, drying the stack in which the first layer, the second layer, and the third layer are stacked,
wherein the drying temperature for the stack is higher than the drying temperature for each of the first layer, second layer, and third layer.

28. The method of preparing the solid electrolyte membrane as claimed in claim 27, wherein
the drying temperature of the stack is performed at 70 °C to 120 °C.

29. An all-solid-state rechargeable battery, comprising

a positive electrode layer;
a negative electrode layer; and
the solid electrolyte membrane as claimed in any one of claims 1 to 18 between the positive electrode layer and the negative electrode layer.

30. The all-solid-state rechargeable battery as claimed in claim 29, wherein

the negative electrode includes
a negative electrode current collector; and a negative electrode coating layer disposed on the negative electrode current collector and including a lithophilic metal, a carbon material, or a combination thereof,
wherein a lithium metal layer is formed by charging between the negative electrode current collector and the negative electrode coating layer.

# FIG. 1

# FIG. 2

300

# FIG. 3

# FIG. 4

# FIG. 5

# FIG. 6

# FIG. 7

# FIG. 8

## INTERNATIONAL SEARCH REPORT

| | International application No. |
| --- | --- |
| | **PCT/KR2024/005146** |

| | |
| --- | --- |
| **A. CLASSIFICATION OF SUBJECT MATTER** | |
| **H01M 10/0562**(2010.01)i; **H01M 10/052**(2010.01)i; **H01M 4/133**(2010.01)i; **H01M 4/134**(2010.01)i; **C01B 17/22**(2006.01)i | |
| According to International Patent Classification (IPC) or to both national classification and IPC | |

| **B. FIELDS SEARCHED** |
| --- |
| Minimum documentation searched (classification system followed by classification symbols) |
| H01M 10/0562(2010.01); H01M 10/052(2010.01); H01M 10/056(2010.01); H01M 4/36(2006.01); H01M 4/38(2006.01); H01M 4/62(2006.01); H01M 50/463(2021.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 전고체 전지(all-solid state battery), 고체 전해질 입자(solid electrolyte particle), 탄소(carbon), 코어/쉘(core/shell), 고체전해질막(solid electrolyte layer), 반자성 입자(diamagnetic particle) |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0028450 A (SAMSUNG SDI CO., LTD.) 08 March 2022 (2022-03-08)<br>See claim 1; paragraphs [0130]-[0134]; and figure 1. | 1-30 |
| A | JP 2017-059325 A (TOYOTA MOTOR CORP.) 23 March 2017 (2017-03-23)<br>See entire document. | 1-30 |
| A | JP 2021-039876 A (SAMSUNG ELECTRONICS CO., LTD.) 11 March 2021 (2021-03-11)<br>See entire document. | 1-30 |
| A | KR 10-2023-0120495 A (KOREA RESEARCH INSTITUTE OF CHEMICAL TECHNOLOGY) 17 August 2023 (2023-08-17)<br>See entire document. | 1-30 |
| A | JP 6101223 B2 (FUJIFILM CORP.) 22 March 2017 (2017-03-22)<br>See entire document. | 1-30 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **19 July 2024** | **22 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005146**

| Patent document cited in search report | | | Publication date (day/month/year) | Patent family member(s) | | | Publication date (day/month/year) |
|---|---|---|---|---|---|---|---|
| KR | 10-2022-0028450 | A | 08 March 2022 | CN | 114122506 | A | 01 March 2022 |
| | | | | EP | 3961782 | A1 | 02 March 2022 |
| | | | | JP | 2022-040100 | A | 10 March 2022 |
| | | | | JP | 7271621 | B2 | 11 May 2023 |
| | | | | US | 2022-0069338 | A1 | 03 March 2022 |
| JP | 2017-059325 | A | 23 March 2017 | CN | 106532125 | A | 22 March 2017 |
| | | | | CN | 106532125 | B | 05 March 2019 |
| | | | | JP | 6233372 | B2 | 22 November 2017 |
| | | | | US | 10297874 | B2 | 21 May 2019 |
| | | | | US | 2017-0077548 | A1 | 16 March 2017 |
| JP | 2021-039876 | A | 11 March 2021 | KR | 10-2021-0027023 | A | 10 March 2021 |
| KR | 10-2023-0120495 | A | 17 August 2023 | None | | | |
| JP | 6101223 | B2 | 22 March 2017 | JP | 2015-159067 | A | 03 September 2015 |
| | | | | US | 10062923 | B2 | 28 August 2018 |
| | | | | US | 2016-0365604 | A1 | 15 December 2016 |
| | | | | WO | 2015-129704 | A1 | 03 September 2015 |

Form PCT/ISA/210 (patent family annex) (July 2022)